# FASCICULE DE BREVET EUROPEEN

(11) **EP 1 522 448 B1**
(45) Date de publication et mention de la délivrance du brevet: **04.07.2007**
(21) Numéro de dépôt: 04292177.5
(22) Date de dépôt: 10.09.2004
(51) Int. Cl.: B60K 11/08

(54) **Dispositif de régulation d'un flux d'air entrant notamment sous le capot d'un véhicule automobile**
Vorrichtung zur Regulierung eines insbesondere unter die Motorhaube eines Kraftfahrzeuges eintretenden Luftstromes
Control device for air flow entering especially under a motor vehicle bonnet

(30) Priorité: 06.10.2003 FR 0311666
(43) Date de publication de la demande: 13.04.2005
(73) Titulaire: Peugeot Citroën Automobiles S.A., 78140 Vélizy Villacoublay (FR)
(72) Inventeur: Peron, Pascal, 78310 Maurepas (FR)
(74) Mandataire: Thinat, Michel

(56) Documents cités:
- DE-A- 3 522 591
- US-A- 5 732 666

## Description

La présente invention concerne un dispositif de régulation d'un flux d'air entrant sous le capot d'un véhicule automobile.

Elle peut néanmoins s'appliquer également à la régulation d'un flux d'air entrant dans tout espace plus ou moins clos.

Actuellement, des dispositifs assurant la régulation du flux d'air de refroidissement dans le compartiment moteur de véhicules sont constitués principalement par la grille de calandre avant du véhicule. Ainsi, lorsque le véhicule se déplace, une quantité d'air plus ou moins frais pénètre à l'intérieur du compartiment moteur afin de refroidir les différents organes se trouvant sous le capot. La quantité d'air pénétrant dans ces conditions dépend directement de la vitesse du véhicule et des dimensions des ajours d'entrée d'air de la calandre ainsi qu'éventuellement de la puissance du ventilateur d'entraînement d'air habituellement logé dans le compartiment moteur, lorsque mis en service.

Cependant, ces ajours sont de dimensions fixes de sorte que les débits et températures d'air de refroidissement ne sont pas maîtrisables car ils sont directement liés à la vitesse de déplacement du véhicule et à la température de l'air extérieur. Par conséquent, les organes du compartiment moteur du véhicule situés sous le capot de celui-ci peuvent être excessivement refroidis dans certaines conditions, notamment en hiver, lorsque la température extérieure est faible.

La présente invention a pour but d'éliminer les inconvénients ci-dessus en équipant un dispositif de régulation d'un flux d'air entrant dans un espace plus ou moins clos, du type comprenant un support fixe portant au moins un organe mobile commandé et déplaçable entre des positions de dégagement et d'obturation de l'ouverture de passage du flux d'air délimitée par le support fixe, l'organe mobile comprenant au

moins un volet monté pivotant entre deux éléments parallèles du support fixe autour de son axe longitudinal, l'une des extrémités pivotantes du volet comprenant les moyens de commande du pivotement du volet constitués par une roue dentée accouplée à un axe cylindrique de l'extrémité du volet monté à rotation dans l'élément correspondant, et une vis sans fin commandée permettant l'entraînement de la roue dentée dans un sens ou dans l'autre pour amener le volet à sa position de dégagement ou d'obturation de l'ouverture de passage du flux d'air, comme décrit dans US 5,732,666, avec au moins un deuxième volet monté pivotant entre les deux éléments parallèles du support fixe autour de son axe longitudinal en-dessous du premier volet de manière que les deux volets soient disposés dans le même plan à leur position d'obturation de l'ouverture de passage de flux d'air et les moyens de commande du pivotement du deuxième volet comprennent une roue dentée disposée en-dessous de la roue dentée du premier volet dans le même plan que cette dernière et accouplée à un axe cylindrique d'extrémité du deuxième volet monté à rotation dans l'élément du support fixe et la vis sans fin qui est commune aux deux roues dentées et peut être commandée à des instants différents pour entraîner à l'unisson dans le même sens les deux roues dentées de manière à amener dans un premier temps uniquement l'un des volets à sa position de dégagement de l'ouverture de passage du flux d'air pendant que l'autre volet reste à sa position d'obturation de cette ouverture, puis dans un second temps, l'autre volet à sa position de dégagement de l'ouverture pendant que le volet précédent reste à sa position de dégagement de cette ouverture, ou réciproquement.

La vis sans fin peut également être commandée pour entraîner à l'unisson dans le même sens les deux roues dentées de manière à amener simultanément les deux volets à leur position de dégagement ou d'obturation de l'ouverture de passage du flux d'air suivant l'état qu'ils occupaient auparavant.

De préférence, le moyen d'accouplement de chaque roue dentée à l'axe cylindrique du volet correspondant comprend deux doigts de crabotage solidaires d'une face latérale de la roue dentée en étant diamétralement opposés et disposés de part et d'autre de deux ailettes diamétralement opposées solidaires de l'extrémité libre de l'axe cylindrique, les deux doigts de crabotage étant en appui respectivement sur les deux faces alternes des ailettes et, en position d'obturation des volets, l'un d'eux est maintenu fermé par un ressort de rappel de torsion non contraint interposé entre l'axe cylindrique de ce volet et l'élément et l'autre volet est maintenu fermé par les doigts de crabotage de la roue dentée correspondante sur lesquels sont en appui les ailettes de l'axe cylindrique de ce volet sous l'action d'un autre ressort de rappel de torsion interposé entre l'axe cylindrique de l'autre volet et l'élément et qui est contraint dans un sens tendant à amener l'autre volet à sa position de dégagement de l'ouverture.

Lorsque la vis sans fin est commandée pour amener successivement les deux volets à leur position de dégagement de l'ouverture, les roues dentées sont entraînées à chaque fois par la vis sans fin de manière à provoquer une rotation de celles-ci de 90° et, dans le premier temps, les doigts de crabotage de la roue dentée du volet restant à sa position d'obturation sont tournés pour les amener en appui sur les faces opposées des ailettes de l'axe cylindrique dont le ressort de rappel reste non contraint et les doigts de crabotage de l'autre roue dentée de l'autre volet sont également tournés dans le même sens à la même position angulaire que les précédents pour libérer le ressort de rappel contraint qui provoque le pivotement de l'autre volet à sa position de dégagement de l'ouverture à laquelle il est maintenu par ce ressort alors non contraint puis, dans le second temps, les doigts de crabotage de la roue dentée du volet maintenu à sa position d'obturation sont à nouveau tournés de manière à entraîner en rotation les ailettes de l'axe cylindrique de ce volet en contraignant le ressort de rappel associé jusqu'à ce que le volet occupe sa position de dégagement de l'ouverture et les doigts de crabotage de l'autre roue dentée du volet restant à sa position de dégagement sont tournés dans le même sens et à la même position angulaire que les précédents pour les amener en appui sur les faces opposées des ailettes de l'axe cylindrique dont le ressort de rappel reste non contraint.

De préférence, chaque doigt de crabotage présente en section transversale une forme en segment de cercle d'un angle au centre de 90°.

Les ressorts de rappel sont en forme de bagues fendues entourant leurs axes cylindriques respectifs et dont l'une des extrémités est fixée à l'élément du support fixe et l'autre extrémité est fixée à l'axe cylindrique correspondant, la bague de chaque ressort de rappel étant pratiquement fermée à sa position non contrainte, tandis que la bague du ressort de rappel contraint associé au volet maintenu avec l'autre volet à sa position d'obturation de l'ouverture est en partie enroulée sur elle-même et l'autre bague du ressort de rappel contraint de l'autre volet amené à sa position de dégagement de l'ouverture dans le second temps est ouverte élastiquement.

Chaque roue dentée est montée à rotation sur un axe de support immobilisé en translation par rapport à l'élément et solidaire de l'axe cylindrique du volet correspondant coaxialement à ce dernier par une goupille formée par une vis.

L'extrémité de chaque bague de ressort de rappel est fixée à une extrémité libre de la goupille de l'axe cylindrique du volet correspondant.

L'axe de support de chaque roue dentée traverse cette dernière et l'élément en étant monté à rotation sur ce dernier et est solidaire, à son extrémité opposée à l'axe cylindrique du volet correspondant, de l'extrémité d'un autre volet situé dans le même plan que le précédent en prolongement de celui-ci et dont l'autre extrémité est montée pivotante sur un troisième élément du support fixe de manière que ces deux volets puissent pivoter à l'unisson pour dégager ou obturer les ouvertures délimitées entre les éléments.

Avantageusement, le support fixe est en forme de cadre rectangulaire et peut être fixé derrière la grille de calandre avant d'entrée d'air circulant sous le capot d'un véhicule automobile.

Les volets sont disposés sensiblement perpendiculairement au plan du cadre à leur position de dégagement de l'ouverture de passage du flux d'air.

L'invention vise également un véhicule automobile équipé d'un dispositif de régulation d'un flux d'air tel que défini précédemment.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue en perspective d'un cadre de support de volets indépendants permettant la régulation d'un flux d'air entrant dans un espace plus ou moins clos et occupant leur position de fermeture ;
- la figure 2 est une vue semblable à celle de la figure 1 et représentant deux des volets à leur position d'ouverture, les autres restant fermés ;
- la figure 3 est une vue semblable à celle de la figure 1 et représentant tous les volets à leur position d'ouverture du cadre ;
- la figure 4 est une vue semblable à celle de la figure 1 et représentant en outre une vis sans fin commune de commande de l'ouverture ou de la fermeture des volets de régulation ;
- la figure 5 est une vue éclatée en perspective agrandie de la partie cerclée en V de la figure 2 et représentant en partie les moyens de commande du pivotement des volets ;
- la figure 6 est une vue en perspective de la partie cerclée en VI de la figure 1 et représentant en partie les deux moyens de commande respectivement de deux volets adjacents occupant leur position de fermeture ;
- la figure 7 est une vue semblable à celle de la figure 6 et représentant l'un des volets en position d'ouverture ;
- la figure 8 est une vue semblable à celle de la figure 6 et représentant les deux volets à leur position d'ouverture ;
- les figures 9 à 11 représentent des ressorts de torsion utilisés dans les mécanismes de commande de pivotement des volets à des positions contraintes et non contrainte ; et
- les figures 12 à 14 représentent différentes phases de pivotement des volets de leur position de fermeture à leur position d'ouverture du cadre.

Le dispositif de l'invention va être décrit dans l'application à la régulation d'un flux d'air entrant sous le capot d'un véhicule automobile, mais il est bien entendu qu'il peut s'appliquer à tout espace plus ou moins clos dans lequel doit circuler de manière régulée de l'air de refroidissement.

En se reportant aux figures, la référence 1 désigne un dispositif de régulation d'un flux d'air circulant sous le capot d'un véhicule automobile et constitué par un support en forme de cadre 1 fixé derrière la grille de calandre avant du véhicule et délimitant l'ouverture 2 de passage du flux d'air.

Le cadre 1, de forme rectangulaire, porte des volets 3 et comporte deux montants extrêmes 4 et un montant central 5 fixés entre les deux longerons 6 du cadre 1.

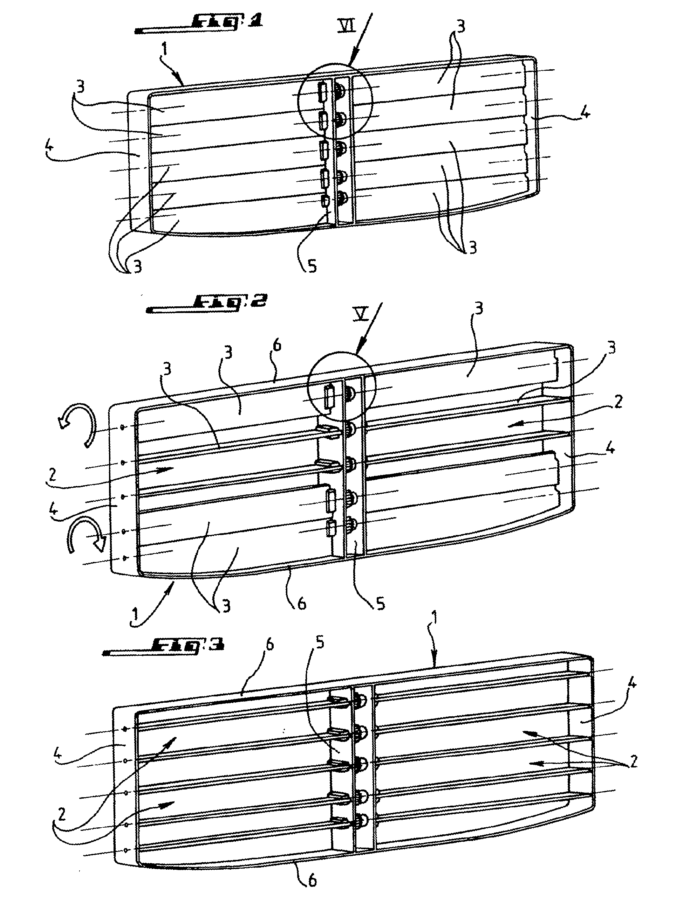

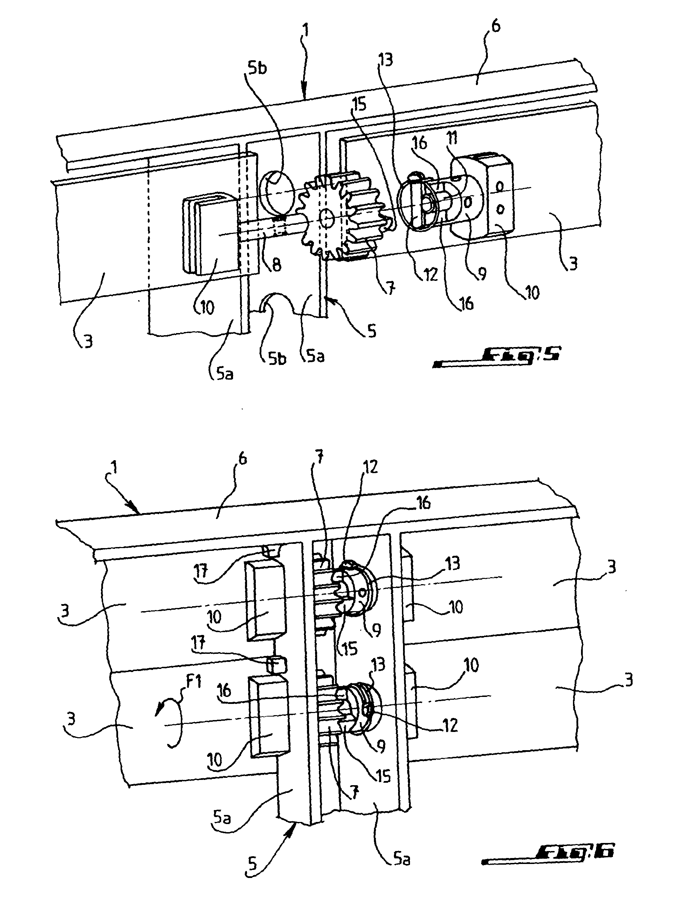

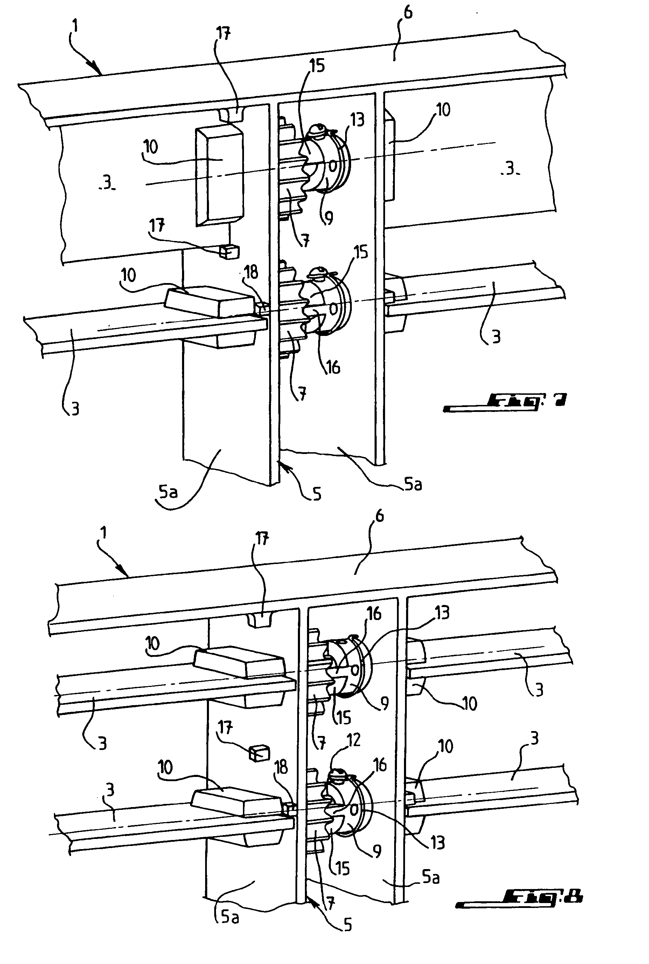

Le cadre 1 porte dans le cas présent cinq paires de volets jumelés 3 disposés les uns au-dessus des autres et montés pivotants autour de leurs axes longitudinaux entre les trois montants 4, 5 de manière à occuper une position d'obturation de l'ouverture 2 du cadre 1 à laquelle les volets 3 sont disposés dans un même plan comme représenté en figure 1 ou une position de dégagement complet de l'ouverture 2 à laquelle les volets 3 sont disposés parallèlement les uns par rapport aux autres perpendiculairement au plan médian longitudinal du cadre 1 comme représenté en figure 3.

Comme représenté en figure 2, deux des volets 3 ont été basculés pour occuper une position de dégagement partiel de l'ouverture 2 tandis que les trois autres volets 3 sont maintenus à leur position d'obturation de cette ouverture.

Les deux volets jumelés 3 d'une même paire sont montés pivotants en prolongement l'un de l'autre entre respectivement les deux montants extrêmes 4 et le montant central 5 par des moyens de commande.

Les extrémités des volets 3 opposées au montant central 5 sont montées pivotantes respectivement sur les deux montants extrêmes 4 de façon classique par des axes cylindriques solidaires de ces extrémités et montés en rotation dans les montants 4.

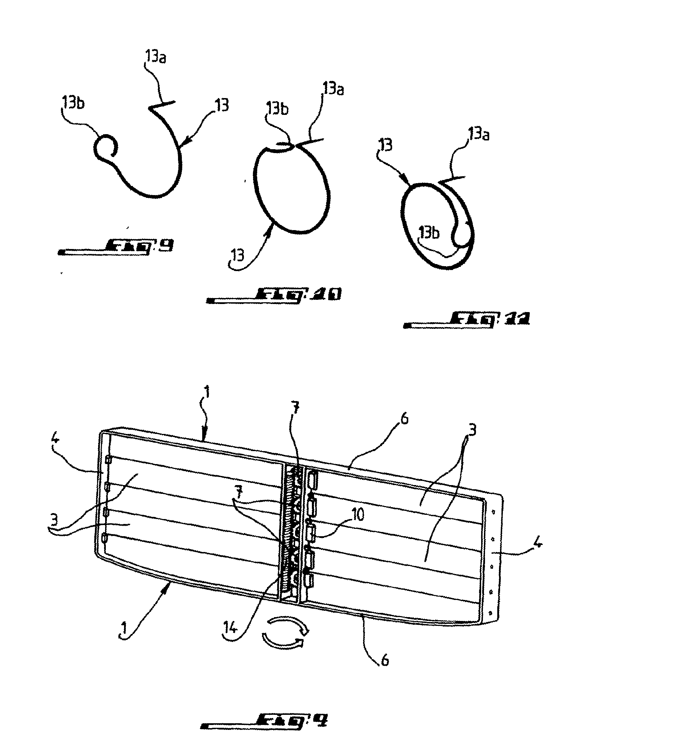

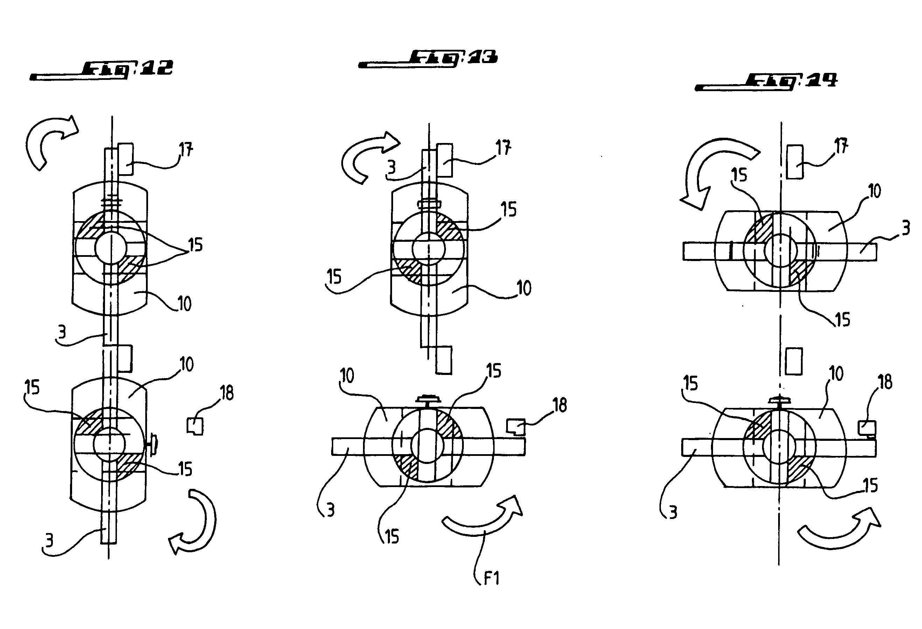

Les moyens de commande du pivotement de deux volets jumelés 3 de chaque paire de volets comprennent, comme cela ressort mieux des figures 5 à 8, une roue dentée ou pignon 7 montée à rotation sur un axe 8 immobilisé en translation sur le montant 5 et monté à rotation au travers de celui-ci en faisant saillie de part et d'autre de ce montant. Le pignon 7 est en fait logé entre deux ailettes parallèles 5a du montant 5 et l'une des extrémités de l'axe 8 est solidaire de l'extrémité de l'un des volets jumelés 3 opposée à celle montée pivotante sur le montant extrême 4 et son extrémité opposée est solidaire d'un axe ou petit arbre cylindrique 9 coaxialement à ce dernier, l'axe cylindrique 9 étant solidaire de l'extrémité de l'autre volet 3 adjacente au montant 5.

Les axes 8 et 9 sont fixés aux extrémités respectives des volets jumelés 3 par l'intermédiaire d'un élément en forme de chape 10 entre les branches duquel est fixée l'extrémité correspondante du volet, par exemple à l'aide de vis de fixation traversant ces branches et l'extrémité du volet 3.

L'extrémité de l'axe 8 solidaire de l'axe 9 pénètre dans un petit tube 11 solidaire de l'axe 9 et de plus petit diamètre que ce dernier, l'extrémité de l'axe 8 pénétrant également en partie dans l'axe 9 en étant solidaire de ce dernier par une goupille 12 formée par une vis dont au moins une extrémité libre constituant la tête de vis fait saillie radialement de l'axe cylindrique 9.

En outre, l'axe cylindrique 9, qui est monté à rotation dans un perçage 5b de l'ailette correspondante 5a du montant 5, fait saillie entre les ailettes 5a de ce montant, tandis que l'élément en forme de chape 10 est situé à l'extérieur de l'ailette 5a comportant le perçage 5b.

Un ressort de rappel 13 travaillant en torsion est réalisé en forme générale de bague montée coaxialement autour de l'axe cylindrique 9 en ayant l'une de ses extrémités droite 13a solidaire de l'ailette correspondante 5a du montant 5 et son extrémité opposée en forme de boucle 13b solidaire de l'axe 9 par la tête de la vis 12 coiffant la boucle 13b pour la serrer sur la face latérale externe correspondante de l'axe 9. La manière dont les différents ressorts 13 associés aux différentes paires de volets 3 sont précontraints ou non sera décrite ultérieurement.

Les différentes roues dentées 7 associées respectivement aux paires de volets 3 sont disposées les unes au-dessus des autres entre les ailettes 5a du montant 5 parallèlement à celles-ci et peuvent être entraînées en rotation simultanément dans le même sens par une vis sans fin 14 faisant partie des moyens de commande et en engrènement avec les roues dentées 7. Bien que cela ne soit pas représenté, la vis sans fin 14 peut être montée à rotation à ses extrémités entre deux pattes de support pouvant être solidaires du cadre 1 et peut être accouplée à l'une de ses extrémités à un moteur électrique, non représenté, actionné par un calculateur embarqué sur le véhicule recevant des informations de paramètres relatifs par exemple aux conditions de température des différents organes présents sous le capot du véhicule.

Chaque roue dentée 7 comporte deux doigts de crabotage 15 solidaires de la face latérale de la roue 7 en regard de l'axe cylindrique 9 en étant diamétralement opposés et disposés de part et d'autre de deux ailettes diamétralement opposées 16 solidaires du tube 11 de l'axe 9. Les deux doigts de crabotage 15 sont en appui respectivement sur les deux faces alternes des ailettes 16 et présentent chacun en section une forme de segment de cercle d'un angle au centre de 90°.

Le fonctionnement du dispositif de régulation de l'invention va être maintenant décrit en référence à deux paires adjacentes superposées de volets jumelés 3, étant bien entendu que ce fonctionnement peut s'étendre également aux autres volets de ce dispositif.

En position d'obturation de l'ouverture 2 du cadre 1 par les volets 3 représentée en figure 6, le ressort de torsion 13 de la paire supérieure de volets 3 n'est pas contraint, c'est-à-dire qu'il occupe la position représentée en figure 10 à laquelle la bague de ressort 13 est pratiquement fermée et entoure pratiquement complètement l'axe 9. Ainsi, les volets supérieurs 3 sont maintenus à leur position d'obturation par le ressort de torsion 13 et la roue dentée 7 qui est immobilisée par la vis sans fin 14. Pour empêcher les volets supérieurs 3 de pivoter sous l'action du vent lors des déplacements du véhicule, une butée 17, solidaire de la face interne du longeron supérieur 6 du cadre 1 est prévue, sur laquelle vient en appui la partie d'extrémité correspondante du volet 3 opposé à celui associé à l'axe cylindrique 9. D'autres butées 17 sont prévues sur le montant 5 pour les autres volets. A cette condition d'obturation des volets supérieurs 3, les deux doigts de crabotage 15 de la roue dentée supérieure 7 sont simplement en appui sur les faces correspondantes des ailettes 16 de l'axe 9 sans exercer sur celles-ci de couple de forces. Le volet est donc également maintenu par l'appui des ailettes 16 d'une part sur les doigts de crabotage 15 et d'autre part sur la butée 17 (voir figure 12). Par contre, le ressort de torsion 13 des volets inférieurs 3 adjacents aux volets supérieurs 3 est contraint de la manière représentée en figure 11, c'est-à-dire que la bague de ce ressort est enroulée sur elle-même autour de l'axe cylindrique correspondant 9 pour exercer un couple de forces tendant à amener les volets jumelés inférieurs 3 à leur position de dégagement de l'ouverture 2 comme symbolisé par le sens de rotation de la flèche F1 en figure 6, mais le ressort 13 est maintenu contraint par les doigts de crabotage 15 de la roue dentée 7 et la vis sans fin 14 qui exercent le couple de retenue antagoniste pour maintenir les volets inférieurs 3 à leur position d'obturation de l'ouverture 2. Il est à noter que la vis 12 de l'axe cylindrique 9 associé aux volets jumelés inférieurs 3 est disposée à un emplacement différent de celle associée à l'axe 9 des volets supérieurs 3 et dans le cas présent elle s'étend perpendiculairement à cette dernière, pour que le mécanisme commande le pivotement de ces volets 3 à la position telle que le ressort supérieur 13 soit non contraint et le ressort inférieur 13 soit contraint.

La situation des volets 3 en figure 6 est également représentée en figure 12.

Pour faire pivoter la paire de volets jumelés inférieurs 3 dans le sens du dégagement de l'ouverture 2, il suffit de commander la vis sans fin 14 par le calculateur de bord pour qu'elle déplace simultanément en rotation les deux roues dentées 7 d'un angle de rotation de 90° dans le sens symbolisé par la flèche F1 pour déplacer également de 90° les doigts de crabotage 15. Durant cette rotation, le ressort de rappel 13 des volets inférieurs 3 est libéré pour permettre à ces derniers d'effectuer une rotation de 90° autour de leurs axes longitudinaux jusqu'à venir en appui sur une butée 18 et le ressort 13 occupe alors sa position non contrainte de la figure 10 pour maintenir les volets inférieurs 3 à leur position de dégagement perpendiculaire au plan du cadre 1. Pendant cette rotation, les doigts de crabotage 15 de la roue dentée 7 associée aux volets jumelés supérieurs 3 ont également tourné de 90° pour venir en appui sur les faces opposées des ailettes 16 mais sans provoquer le pivotement des volets supérieurs 3 maintenus à leur position d'obturation de l'ouverture 2 par le ressort de rappel 13 toujours non contraint. Les volets 3 occupent alors les positions représentées aux figures 7 et 13. Ainsi, les volets inférieurs 3 ont été amenés à leur position de dégagement de l'ouverture 2 indépendamment des volets supérieurs 3.

On notera que dans cette position, le ressort 13 empêche la rotation des volets inférieurs 3 dans le sens des aiguilles d'une montre vu sur la figure 13 tandis que la rotation en sens inverse est empêchée par l'appui des ailettes sur les doigts de crabotage 15 et la butée 18.

Pour ce qui est des volets supérieurs, c'est la rotation en sens inverse des aiguilles d'une montre qui est empêchée par le ressort et la rotation dans le sens horaire qui est empêchée par l'appui des ailettes 16 sur les doigts de crabotage 15 et la butée 17.

Puis le calculateur de bord, si nécessaire, et dans un second temps, peut amener également les volets jumelés supérieurs 3 à leur position de dégagement de l'ouverture 2 pour faire entrer davantage d'air de refroidissement dans le compartiment moteur du véhicule, la vis sans fin 14 étant alors à nouveau commandée pour effectuer une rotation dans le même sens de 90° des roues dentées 7, ce qui amène les doigts de crabotage 15 de la roue dentée supérieure 7 à entraîner en rotation les ailettes 16 de l'axe cylindrique 9 pour faire pivoter les volets supérieurs 3 dans le sens de leur position de dégagement de l'ouverture comme représenté aux figures 8 et 14 qui montrent que les volets supérieurs et inférieurs 3 sont parallèles les uns au-dessus des autres. Pendant ce mouvement de rotation, les doigts de crabotage 15 de la roue dentée inférieure 7 ont tourné librement relativement à l'axe cylindrique 9 pour venir en appui sur les faces opposées de leurs ailettes respectives 16 sans provoquer le pivotement des volets inférieurs 3 qui sont maintenus à leur position de dégagement par le ressort 13 toujours non contraint. Plus précisément dans cette position, les volets inférieurs 3 sont également bloqués par l'appui des ailettes 16 d'une part sur les doigts de crabotage 15 et d'autre part sur la butée 18. Le ressort 13 des volets supérieurs 3 est quant à lui bien entendu contraint comme représenté sur la figure 9 qui montre que la bague de ressort est ouverte élastiquement pour exercer un couple de rotation dans le sens tendant à ramener les volets supérieurs 3 à leur position initiale d'obturation de l'ouverture 2, le ressort 13 étant maintenu contraint par les doigts de crabotage 15 et la roue dentée 7 retenue par la vis sans fin 14.

Lorsque le calculateur de bord décidera de ramener successivement les volets 3 à leur position d'obturation de la figure 6, la cinématique ci-dessus décrite sera alors inversée.

Bien entendu, la vis sans fin 14 peut être commandée pour ouvrir partiellement au moins l'une des paires de volets 3 et à les maintenir dans cette position.

De même, cette vis sans fin 14 peut être commandée pour déplacer simultanément les volets supérieurs et inférieurs 3 directement à leur position de dégagement de l'ouverture 2 en faisant pivoter les roues dentées 7 de 180°.

Comme représenté en figure 4, la vis sans fin 14 permet l'entraînement dans un même sens des cinq roues dentées 7 associées respectivement aux cinq paires de volets jumelés 3 pour commander le pivotement de certains volets à leur position de dégagement de l'ouverture 2 tout en maintenant les autres à leur position d'obturation de cette ouverture ou faire pivoter simultanément en une seule fois tous les volets 3 à leur position de dégagement de l'ouverture 2. Le moteur électrique entraînant la vis sans fin 14 et pouvant être relié à cette dernière par un flexible, sera commandé par le calculateur de bord du véhicule pour assurer un parfait fonctionnement de la boucle de refroidissement du moteur, de la boucle de réfrigération, de la suralimentation, et plus généralement de la thermique sous le capot de ce véhicule. Lorsqu'un ou plusieurs organes situés sous le capot du véhicule auront besoin d'être refroidis, les volets 3 s'ouvriront soit en partie, soit en totalité. Une fois la réduction de température atteinte, le calculateur pilote le moteur électrique pour que la vis sans fin 14 ramène les volets 3 à leur position d'obturation, partielle ou totale, de l'ouverture 2, ce qui permet donc de mieux réguler les flux d'air entrant sous le capot du véhicule en fonction du besoin en refroidissement.

En outre, les moteurs modernes des véhicules actuels tels que ceux à injection directe dissipent moins de chaleur dans l'eau du circuit de refroidissement du moteur du fait de leur meilleur rendement par rapport aux moteurs classiques. Ce déficit en calories dans le liquide de refroidissement se traduit par un déficit de calories dans l'habitacle du véhicule, qui est actuellement compensé par des dispositifs additionnels du type à résistance chauffante ou brûleur. Le dispositif de régulation de l'invention permet d'améliorer le chauffage de l'habitacle du véhicule.

Dans l'application aux véhicules automobiles, le dispositif de l'invention peut être utilisé sur tout élément de carrosserie d'un véhicule susceptible de comporter une prise d'air, tel que le bloc arrière pour moteur thermique de l'arrière du véhicule. Mais le dispositif de l'invention peut être utilisé dans tout autre domaine présentant les même contraintes techniques, à savoir la régulation d'un fluide et occultation d'orifices.

## Revendications

1. Dispositif de régulation d'un flux d'air entrant dans un espace plus ou moins clos, comprenant un support fixe (1) portant au moins un organe mobile commandé (3) déplaçable entre des positions de dégagement et d'obturation de l'ouverture (2) de passage du flux d'air délimitée par le support fixe (1), l'organe mobile comprenant un premier volet (3) monté pivotant entre deux éléments parallèles (4,5) du support fixe (1) autour de son axe longitudinal, l'une des extrémités pivotantes du volet (3) comprenant les moyens de commande du pivotement du volet constitués par une roue dentée (7) accouplée à un axe cylindrique (9) de l'extrémité du volet (3) monté à rotation dans l'élément correspondant (5), et une vis sans fin commandée (14) permettant l'entraînement de la roue dentée (7) dans un sens ou dans l'autre pour amener le volet (3) à sa position de dégagement ou d'obturation de l'ouverture (2) de passage du flux d'air, **caractérisé en ce qu'**il comprend moins un deuxième volet (3) monté pivotant entre les deux éléments parallèles (4,5) du support fixe (1) autour de son axe longitudinal en dessous du premier volet (3) de manière que les deux volets (3) soient disposés dans le même plan à leur position d'obturation de l'ouverture (2) de passage du flux d'air, et **en ce que** les moyens de commande du pivotement du deuxième volet comprennent une roue dentée (7) disposée en-dessous de la roue dentée (7) du premier volet (3) dans le même plan que cette dernière et accouplée à un axe cylindrique (9) de l'extrémité du deuxième volet (3) monté à rotation dans l'élément (5) du support fixe (1), et la vis sans fin (14) qui est commune aux deux roues dentées (7) et peut être commandée à des instants différents pour entraîner à l'unisson dans le même sens les deux roues dentées (7) de manière à amener dans un premier temps uniquement l'un des volets (3) à sa position de dégagement de l'ouverture (2) de passage du flux d'air pendant que l'autre volet (3) reste à sa position d'obturation de cette ouverture, puis dans un second temps l'autre volet (3) à sa position de dégagement de l'ouverture (2) pendant que le volet précédent (3) reste à sa position de dégagement de cette ouverture, ou réciproquement.

2. Dispositif selon la revendication 1, **caractérisé en ce que** la vis sans fin (14) peut également être commandée pour entraîner à l'unisson dans le même sens les deux roues dentées (7) de manière à amener simultanément les deux volets (3) à leur position de dégagement ou d'obturation de l'ouverture (2) de passage du flux d'air suivant l'état qu'ils occupaient auparavant.

3. Dispositif selon la revendication 1 ou 2, **caractérisé en ce que** le moyen d'accouplement de chaque roue dentée (7) à l'axe cylindrique (9) du volet correspondant (3) comprend deux doigts de crabotage (15) solidaires d'une face latérale de la roue dentée (7) en étant diamétralement opposés et disposés de part et d'autre de deux ailettes diamétralement opposées (16) solidaires de l'extrémité libre de l'axe cylindrique (9), les deux doigts de crabotage (15) étant en appui respectivement sur les deux faces alternes des ailettes (16), et **en ce qu'**en position d'obturation des volets (3), l'un d'eux est maintenu fermé par un ressort de rappel de torsion non contraint (13) interposé entre l'axe cylindrique (9) de ce volet et l'élément (5), et l'autre volet (3) est maintenu fermé par les deux doigts de crabotage (15) de la roue dentée correspondante (7) sur lesquels sont en appui les ailettes (16) de l'axe cylindrique (9) de ce volet sous l'action d'un autre ressort de rappel de torsion (13) interposé entre l'axe cylindrique (9) de l'autre volet (3) et l'élément (5) et qui est contraint dans un sens tendant à amener l'autre volet (3) à sa position de dégagement de l'ouverture (2).

4. Dispositif selon la revendication 3, **caractérisé en ce que** lorsque la vis sans fin (14) est commandée pour amener successivement les deux volets (3) à leur position de dégagement de l'ouverture (2), les roues dentées (7) sont entraînées à chaque fois par la vis sans fin (14) de manière à provoquer une rotation de celles-ci de 90° et, dans le premier temps, les doigts de crabotage (15) de la roue dentée (7) du volet (3) restant à sa position d'obturation sont tournés pour les amener en appui sur les faces opposées des ailettes (16) de l'axe cylindrique (9) dont le ressort de rappel (13) reste non contraint et les doigts de crabotage (15) de l'autre roue dentée (7) de l'autre volet (7) sont également tournés dans le même sens à la même position angulaire que les précédents pour libérer le ressort de rappel contraint (13) qui provoque le pivotement de l'autre volet (3) à sa position de dégagement de l'ouverture (2) à laquelle il est maintenu par ce ressort (13) alors non contraint, puis, dans le second temps, les doigts de crabotage (15) de la roue dentée (7) du volet (3) maintenu à sa position d'obturation sont à nouveau tournés de manière à entraîner en rotation les ailettes (16) de l'axe cylindrique (9) de ce volet en contraignant le ressort de rappel associé (13) jusqu'à ce que le volet (3) occupe sa position de dégagement de l'ouverture (2) et les doigts de crabotage (15) de l'autre roue dentée (7) du volet (3) restant à sa position de dégagement sont tournés dans le même sens et à la même position angulaire que les précédents pour les amener en appui sur les faces opposées des ailettes (16) de l'axe cylindrique (9) dont le ressort de rappel (13) reste non contraint.

5. Dispositif selon la revendication 3 ou 4, **caractérisé en ce que** chaque doigt de crabotage (15) présente en section transversale une forme en segment de cercle d'un angle au centre de 90°.

6. Dispositif selon l'une des revendications 3 à 5, **caractérisé en ce que** les ressorts de rappel (13) sont en forme de bague fendue entourant leurs axes cylindriques respectifs (9) et dont l'une des extrémités (13a) est fixée à l'élément (5) du support fixe (1) et l'autre extrémité (13b) est fixée à l'axe cylindrique correspondant (9), la bague de chaque ressort de rappel (13) étant pratiquement fermée à sa position non contrainte, tandis que la bague du ressort de rappel contraint (13) associé au volet (3) maintenu avec l'autre volet (3) à sa position d'obturation de l'ouverture (2) est en partie enroulée sur elle-même et l'autre bague du ressort de rappel contraint (13) de l'autre volet amené à sa position de dégagement de l'ouverture (2) dans le second temps est ouverte élastiquement.

7. Dispositif selon l'une des revendications précédentes, **caractérisé en ce que** chaque roue dentée (7) est montée à rotation sur un axe de support (8) immobilisé en translation par rapport à l'élément (5) et solidaire de l'axe cylindrique (9) du volet correspondant (3) coaxialement à ce dernier par une goupille (12) formée par une vis.

8. Dispositif selon la revendication 7 lorsque considérée en combinaison avec la revendication 6, **caractérisé en ce que** l'extrémité (13b) de chaque bague de ressort de rappel (13) est fixée à une extrémité libre de la goupille (12) de l'axe cylindrique (9) du volet correspondant (3).

9. Dispositif selon la revendication 7 ou 8, **caractérisé en ce que** l'axe de support (8) de chaque roue dentée (7) traverse cette dernière et l'élément (5) en étant monté à rotation sur ce dernier et est solidaire, à son extrémité opposée à l'axe cylindrique du volet correspondant (3), de l'extrémité d'un autre volet (3) situé dans le même plan que le précédent en prolongement de celui-ci et dont l'autre extrémité est montée pivotante sur un troisième élément (4) du support fixe (1) parallèle aux deux autres éléments de manière que ces deux volets puissent pivoter à l'unisson pour dégager ou obturer les ouvertures (2) délimitées entre les éléments (4,5).

10. Dispositif selon l'une des revendications précédentes, **caractérisé en ce que** le support fixe (1) est en forme de cadre rectangulaire et peut être fixé derrière la grille de calandre avant d'entrée d'air circulant sous le capot d'un véhicule automobile.

11. Dispositif selon l'une des revendications précédentes, **caractérisé en ce que** les volets (3) sont disposés sensiblement perpendiculairement au plan du cadre (1) à leur position de dégagement de l'ouverture (2) de passage du flux d'air.

12. Dispositif selon l'une des revendications précédentes, **caractérisé en ce que** les éléments du support fixe (1) sont des montants de celui-ci.

13. Véhicule automobile, **caractérisé en ce qu**'il est équipé d'un dispositif de régulation d'un flux d'air tel que défini dans l'une quelconque des revendications précédentes.

## Claims

1. A device for controlling air flow entering a more or less closed space, comprising a fixed support (1) bearing at least one controlled mobile member (3) displaceable between positions for clearing and blocking the aperture (2) letting through the air flow, delimited by the fixed support (1), the mobile member comprising a first flap (3) pivotably mounted between two parallel components (4,5) of the fixed support (1) around its longitudinal axis, one of the pivoting ends of the flap (3) comprising means for controlling the pivoting of the flap, consisting of a toothed wheel (7) coupled with a cylindrical axis (9) of the end of the flap (3) rotatably mounted in the corresponding component (5), and a controlled worm screw (14) with which the toothed wheel (7) may be driven in one direction or in the other in order to bring the flap (3) to its position for clearing or blocking the aperture (2) letting through the air flow, **characterized in that** it comprises at least one second flap (3) pivotably mounted between both parallel components (4,5) of the fixed support (1) around its longitudinal axis below the first flap (3) so that both flaps (3) are positioned in the same plane in their position for blocking the aperture (3) letting through the air flow, and **in that** the means for controlling the pivoting of the second flap comprise a toothed wheel (7) positioned below the toothed wheel (7) of the first flap (3) in the same plane as the latter and coupled with a cylindrical axis (9) of the end of the second flap (3) rotatably mounted in the component (5) of the fixed support (1), and the worm screw (14) which is common to both toothed wheels (7) and which may be controlled at different instants in order to drive in unison both toothed wheels (7) in the same direction so as to bring only in a first phase, one of the flaps (3) to its position for clearing the aperture (2) letting through the air flow while the other flap (3) remains in its position for blocking this aperture, and then in a second phase, the other flap (3) to its position for clearing the aperture (2) while the preceding flap (3) remains in its position for clearing said aperture, or vice versa.

2. The device according to claim 1, **characterized in that** the worm screw (14) may also be controlled in order to drive in unison both toothed wheels (7) in the same direction so as to simultaneously bring both flaps (3) to their position for clearing or blocking the aperture (2) letting through the air flow, according to the state which they occupied beforehand.

3. The device according to claim 1 or 2, **characterized in that** the means for coupling each toothed wheel (7) with the cylindrical axis (9) of the corresponding flap (3) comprises two jaw clutching fingers (15) integral with a side face of the toothed wheel (7) by being diametrically opposite and positioned on either side of two diametrically opposite fins (16) integral with the free end of the cylindrical axis (9), both jaw clutching fingers (15) respectively pressing against two alternate faces of the fins (16), and **in that** in the blocking position of the flaps (3), one of them is held closed by an unstressed torsion return spring (13) interposed between the cylindrical axis (9) of this flap and the component (5), and the other flap (3) is held closed by the two jaw clutching fingers (15) of the corresponding toothed wheel (7) on which are supported the fins (16) of the cylindrical axis (9) of this flap under the action of another torsion return spring (13) interposed between the cylindrical axis (9) of the other flap (3) and the component (5) and which is stressed in a direction tending to bring the other flap (3) back to its position for clearing the aperture (2).

4. The device according to claim 3, **characterized in that**, when the worm screw (14) is controlled in order to successively bring both flaps (3) to their position for clearing the aperture (2), the toothed wheels (7) are every time driven by the worm screw (14) so as to cause rotation of the latter by 90° and, in the first phase, the jaw clutching fingers (15) of the toothed wheel (7) of the flap (3) remaining in its blocking position are rotated so as to have them pressed against the opposite faces of the fins (16) of the cylindrical axis (9), the return spring (13) of which remains unstressed and the jaw clutching fingers (15) of the other toothed wheel (7) of the other flap (7) are also rotated in the same direction to the same angular position as the preceding ones in order to release the stressed return spring (13) which causes pivoting of the other flap (3) to its position for clearing the aperture (2) at which it is held by this then unstressed spring (13) and then, in the second phase, the jaw clutching fingers (15) of the toothed wheel (7) of the flap (3) held in its blocking position are again rotated so as to drive the fins (16) of the cylindrical axis (9) of this flap, into rotation, by stressing the associated return spring (13) until the flap (3) occupies its position for clearing the aperture (2) and the jaw clutching fingers (15) of the other toothed wheel (7) of the flap (3) remaining in its clearing position are rotated in the same direction and to the same angular position as the previous ones in order to have them press onto the opposite faces of the fins (16) of the cylindrical axis (9), the return spring (13) of which remains unstressed.

5. The device according to claim 3 or 4, **characterized in that** each jaw clutching finger (15) cross-sectionally has a shape of a circular segment with a centre angle of 90°C.

6. The device according to any of claims 3 to 5, **characterized in that** the return springs (13) have the shape of a slit ring surrounding their cylindrical axes (9) and one of the ends (13a) of which is attached to the component (5) of the fixed support (1) and the other end (13b) is attached to the corresponding cylindrical axis (9), the ring of each return spring (13) being practically closed in its unstressed position, whereas the ring of the stressed return spring (13) associated with the flap (3) held with the other flap (3) in its position for blocking the aperture (2) is in part wound upon itself and the other ring of the stressed return spring (13) of the other flap brought into its position for clearing the aperture (2) in the second phase is elastically opened.

7. The device according to any of the preceding claims, **characterized in that** each toothed wheel (7) is rotatably mounted on a supporting axis (8) translationally immobilized relatively to the component (5) and integral with the cylindrical axis (9) of the corresponding flap (3) coaxially with the latter by a pin (12) formed by a screw.

8. The device according to claim 7, when considered in combination with claim 6, **characterized in that** the end (13b) of each return spring (13) ring is attached to a free end of the pin (12) of the cylindrical axis (9) of the corresponding flap (3).

9. The device according to claim 7 or 8, **characterized in that** the supporting axis (8) of each toothed wheel (7) passes through the latter and the component (5) by being rotatably mounted on the latter and is integral, at its end opposite to the cylindrical axis of the corresponding flap (3), with the end of another flap (3) located in the same plane as the previous one in extension of the latter and the other end of which is pivotably mounted on a third component (4) of the fixed support (1) parallel to two other components so that both of these flaps may pivot in unison in order to clear or block the apertures (2) delimited between the components (4,5).

10. The device according to any of the preceding claims, **characterized in that** the fixed support (1) is in the shape of a rectangular frame and may be attached behind the front inlet grille screen for air flowing under the bonnet of a motor vehicle.

11. The device according to any of the preceding claims, **characterized in that** the flaps (3) are positioned substantially perpendicularly to the plane of the frame (1) in their position for clearing the aperture (2) for letting through the air flow.

12. The device according to any of the preceding claims, **characterized in that** the components of the fixed support (1) are the uprights of the latter.

13. A motor vehicle, **characterized in that** it is equipped with a device for controlling air flow as defined in any of the preceding claims.

## Patentansprüche

1. Vorrichtung zur Regulierung eines in einen mehr oder weniger geschlossenen Raum eintretenden Luftstroms, einen starren Träger (1) umfassend, der mindestens ein gesteuertes bewegliches Organ (3) trägt, das zwischen Stellungen der Freigabe und des Verschlusses der von dem starren Träger (1) begrenzten Luftstromdurchgangsöffnung (2) beweglich ist, wobei das bewegliche Organ eine erste Klappe (3) umfasst, die zwischen zwei parallelen Elementen (4, 5) des starren Trägers (1) um ihre Längsachse schwenkbar angebracht ist, wobei eines der schwenkbaren Enden der Klappe (3) Mittel zum Steuern des Schwenkens der Klappe umfasst, die von einem mit einer zylindrischen Achse (9) des Endes der Klappe (3) verbundenen Zahnrad (7) gebildet werden, die drehend im entsprechenden Element (5) angebracht ist, und einer gesteuerten Schnecke (14), die es erlaubt, das Zahnrad (7) in die eine oder die andere Richtung anzutreiben, um die Klappe (3) in ihre Stellung der Freigabe oder des Verschlusses der Luftstromdurchgangsöffnung (2) zu führen, **dadurch gekennzeichnet, dass** sie mindestens eine zweite Klappe (3) umfasst, die zwischen den zwei parallelen Elementen (4, 5) des starren Trägers (1) unter der ersten Klappe (3) um ihre Längsachse schwenkbar angebracht ist, so dass die zwei Klappen (3) in ihrer Verschlussstellung der Luftstromdurchgangsöffnung (2) in derselben Ebene angeordnet sind, und **dadurch**, dass die Mittel zum Steuern des Schwenkens der zweiten Klappe ein Zahnrad (7) umfassen, das unterhalb des Zahnrads (7) der ersten Klappe (3) in derselben Ebene wie Letzteres angeordnet und mit einer zylindrischen Achse (9) des Endes der zweiten Klappe verbunden ist, die drehend im Element (5) des starren Trägers (1) angebracht ist, und die Schnecke (14), die den zwei Zahnrädern (7) gemeinsam ist und zu verschiedenen Augenblicken gesteuert werden kann, um die zwei Zahnräder (7) unisono in dieselbe Richtung anzutreiben, so dass zunächst nur eine der Klappen (3) in ihre Freigabestellung der Luftstromdurchgangsöffnung (2) geführt wird, währenddessen die andere Klappe (3) in ihrer Verschlussstellung dieser Öffnung verbleibt, dann in einem zweiten Schritt die andere Klappe (3) in ihre Freigabestellung der Öffnung (2), währenddessen die vorherige Klappe (3) in ihrer Freigabestellung dieser Öffnung verbleibt, oder umgekehrt.

2. Vorrichtung nach Anspruch 1, **dadurch gekennzeichnet, dass** die Schnecke (14) ebenfalls steuerbar ist, um die zwei Zahnräder (7) unisono in dieselbe Richtung anzutreiben, so dass die zwei Klappen (3) gemäß dem Zustand, den sie vorher einnahmen, gleichzeitig in ihre Stellung der Freigabe oder des Verschlusses der Luftstromdurchgangsöffnung (2) geführt werden.

3. Vorrichtung nach Anspruch 1 oder 2, **dadurch gekennzeichnet, dass** das Mittel zur Verbindung jedes Zahnrads (7) mit der zylindrischen Achse (9) der entsprechenden Klappe (3) zwei Klauenfinger (15) umfasst, die mit einer seitlichen Fläche des Zahnrads (7) verbunden sind, wobei sie diametral gegenüberliegen und an der einen und der anderen Seite von zwei diametral gegenüberliegenden Flügeln (16) angeordnet sind, die mit dem freien Ende der zylindrischen Achse (9) verbunden sind, wobei sich die zwei Klauenfinger (15) jeweils auf die zwei abwechselnden Seiten der Flügel (16) abstützen, und **dadurch**, dass in Verschlussstellung der Klappen (3) eine von ihnen von einer zwischen der zylindrischen Achse (9) dieser Klappe und dem Element (5) zwischengelagerten, nicht gespannten Rückholdrehfeder (13) geschlossen gehalten wird, und die andere Klappe (3) von den zwei Klauenfingern (15) des entsprechenden Zahnrads (7) geschlossen gehalten wird, auf denen sich die Flügel (16) der zylindrischen Achse (9) dieser Klappe unter Einwirkung einer anderen Rückholdrehfeder (13) abstützen, die zwischen der zylindrischen Achse (9) der anderen Klappe (3) und dem Element (5) zwischengelagert ist und die in eine andere Richtung gespannt ist, dazu neigend, die andere Klappe (3) in ihre Freigabestellung der Öffnung (2) zu führen.

4. Vorrichtung nach Anspruch 3, **dadurch gekennzeichnet, dass**, wenn die Schnecke (14) gesteuert wird, um die zwei Klappen (3) sukzessiv in ihre Freigabestellung der Öffnung (2) zu führen, die Zahnräder (7) jedes Mal von der Schnecke (14) derart angetrieben werden, dass eine Rotation derselben von 90° hervorgerufen wird und die Klauenfinger (15) des Zahnrads (7) der Klappe (3), die in ihrer Verschlussstellung verbleibt, zunächst gedreht werden, um sie in Abstützung auf die gegenüberliegenden Seiten der Flügel (16) der zylindrischen Achse (9) zu führen, deren Rückholfeder (13) nicht gespannt bleibt, und die Klauenfinger (15) des anderen Zahnrads (7) der anderen Klappe (7) ebenfalls in dieselbe Richtung in dieselbe Winkelposition wie die Vorhergehenden gedreht werden, um die gespannte Rückholfeder (13) freizugeben, die das Schwenken der anderen Klappe (3) in ihre Freigabestellung der Öffnung (2) hervorruft, in der sie von dieser dann nicht gespannten Feder (13) gehalten wird, dann, in einem zweiten Schritt, die Klauenfinger (15) des Zahnrads (7) der in ihrer Verschlussstellung gehaltenen Klappe (3) erneut gedreht werden, so dass die Flügel (16) der zylindrischen Achse (9) dieser Klappe drehend angetrieben werden, wobei die entsprechende Rückholfeder (13) so lange beansprucht wird, bis die Klappe (3) ihre Freigabestellung der Öffnung (2) einnimmt und die Klauenfinger (15) des anderen Zahnrads (7) der in ihrer Freigabestellung verbleibenden Klappe (3) in dieselbe Richtung und in dieselbe Winkelposition wie die vorhergehenden gedreht werden, um sie in Abstützung auf die gegenüberliegenden Seiten der Flügel (16) der zylindrischen Achse (9) zu führen, deren Rückholfeder (13) nicht gespannt bleibt.

5. Vorrichtung nach Anspruch 3 oder 4, **dadurch gekennzeichnet, dass** jeder Klauenfinger (15) im Querschnitt eine Kreissegmentform mit einem Winkel im Zentrum von 90° aufweist.

6. Vorrichtung nach einem der Ansprüche 3 bis 5, **dadurch gekennzeichnet, dass** die Rückholfedern (13) in Form eines geschlitzten Rings sind, der ihre jeweiligen zylindrischen Achsen (9) umschließt und von dem ein Ende (13a) am Element (5) des starren Trägers (1) befestigt ist und das andere Ende (13b) an der entsprechenden zylindrischen Achse (9) befestigt ist, wobei der Ring jeder Rückholfeder (13) in seiner nicht gespannten Stellung praktisch geschlossen ist, währenddessen der Ring der gespannten Rückholfeder (13), die mit der Klappe (3) verbunden ist, die mit der anderen Klappe (3) in ihrer Verschlussstellung der Öffnung (2) gehalten wird, teilweise um sich selbst eingerollt ist und der andere Ring der gespannten Rückholfeder (13) der anderen Klappe, die dann in ihre Freigabestellung der Öffnung (2) geführt ist, elastisch geöffnet ist.

7. Vorrichtung nach einem der vorangehenden Ansprüche, **dadurch gekennzeichnet, dass** jedes Zahnrad (7) auf einer Trägerachse (8) drehend angebracht ist, die in bezug auf das Element (5) nicht verschiebbar und mit der zylindrischen Achse (9) der entsprechenden Klappe (3) koaxial zu dieser mit einem Zapfen (12) verbunden ist, der von einer Schraube gebildet wird.

8. Vorrichtung nach Anspruch 7, wenn in Kombination mit dem Anspruch 6 betrachtet, **dadurch gekennzeichnet, dass** das Ende (13b) jedes Rückholfederrings (13) an einem freien Ende des Zapfens (12) der zylindrischen Achse (9) der entsprechenden Klappe (3) befestigt ist.

9. Vorrichtung nach Anspruch 7 oder 8, **dadurch gekennzeichnet, dass** die Trägerachse (8) jedes Zahnrads (7) dieses durchquert und das Element (5), wobei sie drehend auf diesem angebracht und an ihrem der zylindrischen Achse der entsprechenden Klappe (3) entgegengesetzten Ende mit den Ende einer anderen Klappe (3) verbunden ist, die sich in derselben Ebene wie die Vorhergehende in Verlängerung derselben befindet und deren anderes Ende schwenkbar an einem dritten Element (4) des starren Trägers (4) parallel zu den zwei anderen Elementen befestigt ist, so dass diese zwei Klappen unisono schwenkbar sind, um die zwischen den Elementen (4, 5) begrenzten Öffnungen freizugeben oder zu verschließen.

10. Vorrichtung nach einem der vorangehenden Ansprüche, **dadurch gekennzeichnet, dass** der starre Träger (1) die Form eines rechteckigen Rahmens hat und hinter dem Kühlergrill vor dem Einlass der unter der Motorhaube eines Fahrzeugs zirkulierenden Luft befestigbar ist.

11. Vorrichtung nach einem der vorangehenden Ansprüche, **dadurch gekennzeichnet, dass** die Klappen (3) in ihrer Stellung der Freigabe der Luftstromdurchgangsöffnung (2) etwa senkrecht zur Ebene des Rahmens (1) angeordnet sind.

12. Vorrichtung nach einem der vorangehenden Ansprüche, **dadurch gekennzeichnet, dass** die Elemente des starren Trägers (1) Streben desselben sind.

13. Kraftfahrzeug, **dadurch gekennzeichnet, dass** es mit einer Vorrichtung zur Regulierung eines Luftstroms ausgestattet ist, so wie in einem der vorangehenden Ansprüche definiert.
